# EUROPÄISCHE PATENTSCHRIFT

(11) **EP 1 158 145 B1**
(45) Veröffentlichungstag und Bekanntmachung des Hinweises auf die Patenterteilung: **21.03.2007**
(21) Anmeldenummer: 01109821.7
(22) Anmeldetag: 21.04.2001
(51) Int. Cl.: F01N 3/08, F01N 3/28, F02D 41/02, F02D 41/14

(54) **Vorrichtung zur Steuerung/Regelung der Regeneration eines NOX-Speicherkatalysators im Abgasstrang einer Brennkraftmaschine**
Assembly for controlling the regeneration of a NOx-absorber catalyst within an exhaust gas line of an internal combustion engine
Dispositif de régulation de la régénération d'un catalyseur accumulateur de NOx dans une ligne d'échappement d'un moteur à combustion interne

(30) Priorität: 20.05.2000 DE 10025076
(43) Veröffentlichungstag der Anmeldung: 28.11.2001
(73) Patentinhaber: Bayerische Motoren Werke Aktiengesellschaft, 80809 München (DE)
(72) Erfinder: Detterbeck, Stefan, 80804 München (DE); Ramatschi, Stephan, 85604 Zorneding (DE); Müller, Peter, 81673 München (DE); Hasenclever, Hanns-Christian,Dr., 80809 München (DE); Preuss, Florian, 80809 München (DE)

(56) Entgegenhaltungen:
- EP-A- 0 485 179
- DE-C1- 19 844 082
- DE-U1- 8 816 154
- US-A- 5 625 156

## Beschreibung

Die Erfindung bezieht sich nach dem Oberbegriff des Patentanspruches 1 auf eine Vorrichtung zur Steuerung/Regelung der Regeneration eines NOx-Speicherkatalysators im Abgasstrang einer Brennkraftmaschine, wobei die mit fettem Abgas bewirkte Regeneration des als Monolithen in einem Gehäuse angeordneten NOx-Speicherkats mittels einer stromab von diesem vorgesehenen Sauerstoff-Sonde über das sauerstoffarme, fette Abgas gesteuert/geregelt beendet ist.

Aus der DE 198 44 082 C1 ist ein Verfahren zum Regenerieren eines NOx-Speicherkatalysators bekannt, wobei zur verbrauchs- und emissionsoptimalen Regeneration eines NOx-Speicherkatalysators für eine insbesondere Mager-Brennkraftmaschine die Konzentration der Regenerierungsmittel, wie Kohlenmonoxid (CO) und Kohlenwasserstoffe (HC), in Abhängigkeit eines Signals einer stromab des NOx-Katalysators angeordneten Sauerstoff-Sonde während der Regenerationsphase verändert wird. Verändert werden hierbei während einer Fett-Spitze zwischen zwei Magerbereichen die Anteile an fettem Gemisch der Brennkraftmaschine schrittweise in Richtung mageres Gemisch, um mit der damit verbundenen Minimierung der Regenerationsmittel einen Regenerationsmitteldurchbruch bzw. eine Minimierung des Regenerationsmittelschlupfes zu erreichen.

Der Erfindung liegt die Aufgabe zugrunde, eine gattungsgemäße Vorrichtung bezüglich der Minimierung eines Regenerationsmitteldurchbruches ohne einen zusätzlichen Steuerungs-/Regelungsaufwand weiterzubilden.

Diese Aufgabe ist mit den Merkmalen des Anspruchs 1 dadurch gelöst, dass der NOx-Speicherkat im stromabseitigen Endbereich eine Dreiwegebeschichtung mit einer relativ hohen Sauerstoff-Speicherfähigkeit aufweist und die Sauerstoff-Sonde im/am Gehäuse der freien Stirnseite des stromabseitigen Endbereiches relativ eng benachbart angeordnet ist, wobei in Projektion der Sauerstoff-Sonde stromauf von der freien Stirnseite aus im stromabseitigen Endbereich des Monolithen eine die Konvertierungsstrecke der Dreiwegebeschichtung verkürzende, katalytisch inaktive Zone angeordnet ist.

Der Vorteil der Erfindung liegt darin, dass gegen Ende der Regenerationsphase des NOx-Speicherkatalysators überschüssige Regenerationsmittel mit der Dreiwegebeschichtung sicher aufoxidiert werden, wobei der Sonde zugleich über die erfindungsgemäß vorgesehene inaktive Zone im Monolithen des NOx-Speicherkatalysators ein derart sauerstoffarmes und damit fettes Abgas zugeführt wird, dass die Sonde ein Signal zur Umstellung von fettem Gemisch auf mageres Gemisch der Brennkraftmaschine liefert. Mit der erfindungsgemäß früheren Umsteuerung auf ein mageres Gemisch der Brennkraftmaschine ist in vorteilhafter Weise in Bezug auf einen Reduktionsmittel-Durchbruch der Ausstoß an fettem Abgas der Brennkraftmaschine früher beendet und damit ein Durchbruch wesentlich reduziert.

In Ausgestaltung der Erfindung wird vorgeschlagen, dass die inaktive Zone vorzugsweise eine Ausnehmung von einer im wesentlichen der Erstreckung der Dreiwegebeschichtung in Abgas-Strömungsrichtung entsprechende Tiefe ist.

Der Vorteil dieser Ausgestaltung ist darin zu sehen, dass mit der erfindungsgemäßen Ausnehmung von entsprechender Tiefe im Endbereich des NOx-Speicherkats eine das fette Abgas nicht konvertierende Zone geschaffen ist zur Auslösung eines Steuersignals. Die Tiefe der Ausnehmung ist dabei so gewählt, dass bei zu Ende gehender Regenerationsphase ohne Durchbruch der Reduktionsmittel mit der Ausnehmung ein gezielter, lokal begrenzter Durchbruch zur Ansteuerung der Sauerstoff-Sonde dient für einen frühzeitigen bzw. rechtzeitigen Abbruch der sauerstoffarmen Fettspitze mit Übergang in den Magerbetrieb der Brennkraftmaschine.

In weiterer Ausgestaltung der Erfindung bezieht sich ein Vorschlag darauf, dass die Ausnehmung am Umfang eines insbesondere zylindrischen Monolithen eine Öffnung bewirkt zum Eingriff eines im/am Gehäuse angeordneten Anschlages. Mit dieser Ausgestaltung ist die Zuordnung von Ausnehmung und Sauerstoff-Sonde gesichert.

Bezüglich einer vorteilhaften Fertigung eines erfindungsgemäß gestalteten Monolithen wird im weiteren vorgeschlagen, dass die Ausnehmung als eine Ringnut um einen zentrischen, im wesentlichen zylindrischen Fortsatz gestaltet ist.

Die Erfindung ist anhand von in der Zeichnung dargestellten Ausführungsbeispielen beschrieben. Es zeigt
- Figur 1: eine Stirnansicht eines NOx-Speicherkatalysators mit im Gehäuse angeordneter Sauerstoff-Sonde und einer zugeordneten Ausnehmung,
- Figur 2: den Katalysator nach Figur 1 in einen abschnittsweisen Längsschnitt gemäß der Linie II-II,
- Figur 3: einen NOx-Speicherkat in einem abschnittsweisen Längsschnitt mit einer als Ringnut gestalteten Ausnehmung, und
- Figur 4: einen NOx-Speicherkat in einem abschnittsweisen Längsschnitt mit einer Ausnehmung, die am Umfang des Monolithen eine Öffnung bewirkt.

In einer Vorrichtung 1 zur Steuerung/Regelung der Regeneration eines NOx-Speicherkatalysators 2 im nicht gezeigten Abgasstrang einer Brennkraftmaschine ist die mit fettem Abgas bewirkte Regeneration des als Monolithen 3 in einem Gehäuse 4 angeordneten NOx-Speicherkats 2 mittels einer stromab von diesem vorgesehenen Sauerstoff-Sonde 5 über das sauerstoffarme, fette Abgas gesteuert/geregelt beendet.

Um diese Vorrichtung 1 bezüglich der Minimierung eines Regenerationsmitteldurchbruches ohne einen zusätzlichen Steuerungs-/Regelungsaufwand weiterzubilden wird vorgeschlagen, dass der NOx-Speicherkat 2 im stromabseitigen Endbereich 6 eine Dreiwegebeschichtung 7 mit einer relativ hohen Sauerstoff-Speicherfähigkeit aufweist und die Sauerstoff-Sonde 5 im/am Gehäuse 4 der freien Stirnseite 8 des stromabseitigen Endbereiches 6 relativ eng benachbart angeordnet ist, wobei stromauf in Projektion der Sauerstoff-Sonde 5 von der freien Stirnseite 8 aus im stromabseitigen Endbereich 6 des Monolithen 3 eine die Konvertierungsstrecke der Dreiwegebeschichtung 7 verkürzende Ausnehmung 9 als eine katalytisch inaktive Zone 9' angeordnet ist.

Anstelle der Ausnehmung 9 kann der Monolith 3 des NOx-Speicherkats 2 im stromabseitigen Endbereich 6 auch unbeschichtete, nicht gezeigte Wabenabschnitte aufweisen zur Ausbildung einer katalytisch inaktiven Zone 9'.

Mit jeder der vorbeschriebenen erfindungsgemäßen Ausgestaltungen einer inaktiven Zone 9' ist erreicht, dass die vorzugsweise als Sprungsonde ausgebildete Sauerstoff-Sonde im zeitlichen Endbereich der Regenerationsphase des NOx-Speicherkatalysators 2 frühzeitig einen Durchbruch an fettem Abgas erkennt und die für den Regenerationsbetrieb gesteuert ausgelöste Fettspitze derart rechtzeitig beendet, dass ein Nachlauf an fettem Abgas in der Abgasleitung vor dem NOx-Speicherkatalysator mit Beendigung der Regenerationsphase durch Umstellung auf Magergemisch der Brennkraftmaschine ein Durchbruch an Regenerationsmitteln vermieden ist.

Mit der Erfindung ist aber auch erreicht, dass der NOx-Speicherkat 2 nach Sondensprung noch eine gewisse Zeit fett gefahren wird und so auch das in den tiefer liegenden Speicherschichten eingelagerte NOx konvertiert und der Speicherkat 2 im wesentlichen voll regeneriert wird.

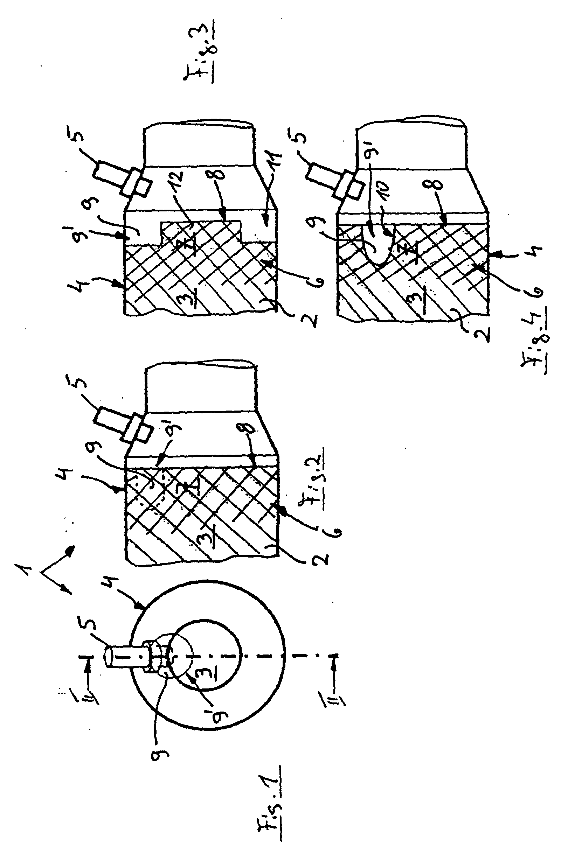

Insbesondere gemäß den Figuren 2 und 4 weist die jeweilige Ausnehmung 9 eine im wesentlichen der Erstreckung der Dreiwegebeschichtung 7 in Abgas-Strömungsrichtung entsprechende Tiefe auf. Mit diesen Ausgestaltungen ist sichergestellt, dass der Sauerstoff-Sonde 5 gegen Beendigung der NOx- Regenerationsphase ausreichend sauerstoffarmes Abgas zugeleitet wird.

Gemäß Figur 4 bewirkt die Ausnehmung 9 am Umfang des Monolithen 3 eine Öffnung 10 zum Eingriff eines im/am Gehäuse 4 angeordneten, nicht gezeigten Anschlages, der beispielsweise als eine im Gehäuse 4 ausgebildete Delle vorgesehen sein kann.

Für eine kostengünstige Herstellung bzw. Fertigung des Monolithen 3 ist gemäß Figur 3 vorgesehen, dass die Ausnehmung 9 als eine Ringnut 11 um einen zentrischen, im wesentlichen zylindrischen Fortsatz 12 gestaltet ist.

Mit der erfindungsgemäßen Vorrichtung 1 erübrigt sich ein gesonderter, nachgeschalteter Dreiwegekat, es ergibt sich eine hohe Emissionssicherheit bei maximaler Ausnutzung der Speicherkapazität des NOx-Speicherkats durch eine Vollregeneration und im übrigen ergibt sich bei einer direkt einspritzenden Brennkraftmaschine auch ein Verbrauchsvorteil.

## Patentansprüche

1. Vorrichtung zur Steuerung/Regelung der Regeneration eines NOx-Speicherkatalysators im Abgasstrang einer Brennkraftmaschine,
- wobei die mit fettem Abgas bewirkte Regeneration des als Monolithen (3) in einem Gehäuse (4) angeordneten NOx-Speicherkats (2) mittels einer stromab von diesem vorgesehenen Sauerstoff-Sonde (5) über das sauerstoffarme, fette Abgas gesteuert/geregelt beendet ist,
**dadurch gekennzeichnet,**
- **dass** der NOx-Speicherkat (2) im stromabseitigen Endbereich (6) eine Dreiwegebeschichtung (7) mit einer relativ hohen Sauerstoff-Speicherfähigkeit aufweist und
- die Sauerstoff-Sonde (5) im/am Gehäuse (4) der freien Stirnseite (8) des stromabseitigen Endbereiches (6) relativ eng benachbart angeordnet ist wobei in der stomaufwärtsgerichteten
Projektion der Sauerstoff-Sonde (5) ausgehend von der freien Stirnseite (8) im stromabseitigen Endbereich (6) des Monolithen (3), eine die Konvertierungsstrecke der Dreiwegebeschichtung (7) verkürzende, katalytisch inaktive Zone (9') angeordnet ist.

2. Vorrichtung nach Anspruch 1, **dadurch gekennzeichnet, dass** die inaktive Zone (9') eine Ausnehmung (9) von einer im wesentlichen der Erstreckung der Dreiwegebeschichtung (7) entsprechenden Tiefe ist.

3. Vorrichtung nach Anspruch 1 und 2, **dadurch gekennzeichnet, dass** die Ausnehmung (9) am Umfang des Monolithen (3) eine Öffnung (10) bewirkt zum Eingriff eines im/am Gehäuse (4) angeordneten Anschlages.

4. Vorrichtung nach Anspruch 1 und 2, **dadurch gekennzeichnet, dass** die Ausnehmung (9) als eine Ringnut (11) um einen zentrischen, im wesentlichen zylindrischen Fortsatz (12) gestaltet ist.

5. Vorrichtung nach einem der Ansprüche 1 bis 4, **dadurch gekennzeichnet, dass** die Sauerstoff- bzw. Lambda-Sonde (5) eine Sprungsonde ist.

6. Vorrichtung nach einem der Ansprüche 1 bis 5, **dadurch gekennzeichnet, dass** der Monolith (3) des NOx-Speicherkats (2) im stromabseitigen Endbereich (6) unbeschichtete Wabenabschnitte als inaktive Zone (9') aufweist.

## Claims

1. A device for open-loop/closed-loop control of the regeneration of an NOx storage catalytic converter in the exhaust system of an internal combustion engine,
- wherein the regeneration with rich exhaust gas of the NOx storage catalytic converter (2), in the form of a monolith (3) in a casing (4), is completed under closed-loop/open-loop control by an oxygen probe (5) provided downstream of the converter, using the oxygen-depleted rich exhaust gas,
**characterised in that**
- in the downstream end region (6) the NOx storage catalytic converter (2) has a three-way coating (7) with a relatively high oxygen storage capacity and
- the oxygen probe (5) in or on the casing (4) is disposed relatively near the free end face (8) of the downstream end region (6), wherein
- in the upstream projection of the oxygen probe (5), starting from the free endface (8) a catalytically inactive zone (9') shortening the conversion section of the three-way coating (7) is disposed in the stream-remote end region (6) of the monolith (3).

2. A device according to claim 1, **characterised in that** the inactive zone (9') is a recess (9) having a depth substantially equal to the extent of the three-way coating (7).

3. A device according to claim 1 and 2, **characterised in that** the recess (9) in the periphery of the monolith (3) forms an opening (10) for engagement of an abutment in or on the casing (4).

4. A device according to claims 1 and 2, **characterised in that** the recess (9) is an annular groove (11) in a central substantially cylindrical projection (12).

5. A device according to any of claims 1 to 4, **characterised in that** the oxygen probe or lambda probe (5) is a snap probe.

6. A device according to any of claims 1 to 5, **characterised in that** the monolith (3) constituting the NOx storage catalytic converter (2) has an inactive zone (9') in the form of non-coated honeycomb portions in the downstream end region (6).

## Revendications

1. Dispositif de commande/régulation de la régénération d'un catalyseur accumulateur de NOx dans la ligne d'échappement d'un moteur à combustion interne,
- la régénération entraînée par le gaz d'échappement gras du catalyseur accumulateur de NOx (2) disposé comme monolithe (3) dans un logement (4) étant terminée de manière commandée/régulée au moyen d'une sonde d'oxygène (5) en aval de celui-ci par l'intermédiaire du gaz d'échappement gras, pauvre en oxygène,
**caractérisé en ce que**
- le catalyseur accumulateur de NOx (2) présente dans la région d'extrémité côté aval (6) un revêtement trois voies (7) avec une capacité d'accumulation d'oxygène relativement élevée et
- la sonde d'oxygène (5) est disposée au voisinage immédiat dans/sur le logement (4) du côté frontal libre (8), au voisinage immédiat de la région d'extrémité côté aval (6),
- une zone inactive du point de vue catalytique (9'), qui raccourcit la course de conversion du revêtement trois voies (7), étant disposée dans la projection orientée de la sonde d'oxygène (5) en amont du côté frontal libre (8) dans la région d'extrémité côté aval (6) du monolithe (3).

2. Dispositif selon la revendication 1,
**caractérisé en ce que**
la zone inactive (9') est un évidement (9) d'une profondeur correspondant essentiellement à l'étendue du revêtement trois voies (7).

3. Dispositif selon la revendication 1 ou 2,
**caractérisé en ce que**
l'évidement (9) réalise une ouverture (10) à la périphérie du monolithe (3) pour l'engagement d'une butée disposée dans/sur le logement (4).

4. Dispositif selon la revendication 1 ou 2,
**caractérisé en ce que**
l'évidement (9) est une rainure annulaire (11) autour d'un prolongement centré, essentiellement cylindrique (12).

5. Dispositif selon l'une des revendications 1 à 4,
**caractérisé en ce que**
la sonde d'oxygène ou sonde lambda (5) est une sonde à saut.

6. Dispositif selon l'une des revendications 1 à 5,
**caractérisé en ce que**
le monolithe (3) du catalyseur accumulateur de NOx (2) présente, dans la région d'extrémité côté aval (6), des sections en nid d'abeilles non revêtues comme zone inactive (9').
